# EUROPÄISCHE PATENTSCHRIFT

(11) **EP 1 661 756 B1**
(45) Veröffentlichungstag und Bekanntmachung des Hinweises auf die Patenterteilung: **16.01.2008**
(21) Anmeldenummer: 05111090.6
(22) Anmeldetag: 22.11.2005
(51) Int. Cl.: B60P 3/08

(54) **Autotransporter sowie Gelenkzug mit einem solchen Autotransporter**
Cars transporting vehicle and such a vehicle combined with a trailer
Véhicule pour le transport de voitures et un tel véhicule combiné avec une remorque

(30) Priorität: 24.11.2004 DE 102004056825
(43) Veröffentlichungstag der Anmeldung: 31.05.2006
(73) Patentinhaber: Schneebichler, Michael Hermann Leonard, 4893 Zell am Moos (AT)
(72) Erfinder: Schneebichler, Michael Hermann Leonard, 4893 Zell am Moos (AT)
(74) Vertreter: von Ahsen, Erwin-Detlef

(56) Entgegenhaltungen:
- FR-A- 2 377 904
- FR-A- 2 455 527
- GB-A- 2 139 968
- US-B1- 6 177 868

## Beschreibung

Die Erfindung betrifft einen Autotransporter mit einem Führerhaus und mit einem von einer Vorderachse und einer Hinterachse getragenen Rahmen, an welchem eine Bühne für Fahrzeuge angeordnet ist, welche zwischen der Vorderachse und der Hinterachse angeordnet sowie an ihrem dem Führerhaus zugewandten Ende schwenkbar gelagert und mit ihrem der Hinterachse zugewandten Ende absenkbar ist. Ein Transporter dieser Art ist aus der FR 2377904 bekannt.

Ein weiterer Autotransporter diese Art ist aus der AT 243 628 bekannt. Neben der zwischen Führerhaus und Hinterachse angeordneten Bühne weist dieser Autotransporter eine weitere Bühne hinter der Hinterachse auf der unteren Ladeebene auf. Um das Beladen der vorderen (zwischen Führerhaus und Hinterachse gelegene) Bühne zu ermöglichen, muß der betreffende Pkw über den Radkasten hinweg gefahren werden. Um dieses zu erreichen, läßt sich die vordere Bühne leicht nach oben schwenken, so daß die zueinander gewandten Enden der vorderen und hinteren Bühne auf gleichem Niveau liegen. Es kann nun über die hintere Bühne ein zu transportierender Pkw auf die vordere Bühne gefahren werden. Sodann wird die vordere Bühne in eine horizontale (zum Fahrzeugrahmen parallele) Ebene geschwenkt.

Aus der DE 23 27 489 A ist ein Autotransporter bekannt, bei dem auf der unteren Ladeebene ein Fahrzeug auf einer schwenkbaren Bühne hinter der Hinterachse transportiert wird. Die Bühne ist dabei mit ihrem in Fahrtrichtung des Autotransporters gesehen hinteren Ende schwenkbar am Rahmen befestigt. Das vordere Ende wird nach oben geschwenkt, so daß die Motorhaube eines zwischen Fahrerhaus und Hinterachse auf der unteren Ladeebene geladenen Fahrzeugs unter der Bühne angeordnet ist. Einen sehr ähnlichen Autotransporter zeigt die FR 24 55 527 A3.

Einen in der Praxis wohl kaum zu realisierenden Autotransporter zeigt die US 27 50225 A. Hinter der Hinterachse ist wiederum eine schwenkbare Bühne angeordnet, bei der das vordere Ende nach oben geschwenkt wird. Auf dieser Bühne wird ein Fahrzeug in einer sehr steilen Position transportiert, so daß zwei Fahrzeuge davor übereinander gestapelt werden können.

Aus der GB 2 139 968 A ist ein Sattelzug zum Transportieren von Fahrzeugen bekannt. Der Sattelauflieger weist eine obere Ladeebene für die Fahrzeuge auf, welche als schwenkbare, sich über die gesamte Länge des Sattelaufliegers erstreckende Bühne ausgebildet ist. Das hintere, von der Zugmaschine abgewandte Ende läßt sich zum Beladen oder oberen Ladeebene auf die untere Ladeebene schwenken.

Schließlich zeigt die DE 689 10 434 T2 einen Autotransporter, bei dem bis zu drei Fahrzeuge in drei Lagen übereinander transportiert werden können. Jedem Fahrzeug ist dabei eine eigene Bühne zugeordnet, um die Fahrzeuge zur Erhöhung der Ladekapazität möglichst gut ineinander schachteln zu können. Dieser Autotransporter ist aufgrund seiner die maximaler Bauhöhe für Lastkraftwagen in Europa überschreitenden Höhe ebenfalls in der Praxis nicht realisierbar.

Die maximale Länge, maximale Breite und maximale Höhe des Gelenkzuges ist aufgrund straßenverkehrsrechtlicher Bestimmungen begrenzt. Ebenso das maximale Gewicht. Ziel jeden Konstrukteurs für Gelenkzüge zum Transport von Kraftfahrzeugen (Autotransportzug) ist es, innerhalb der gesetzlichen Abmessungen möglichst viele Kraftfahrzeuge unterzubringen. Dabei soll der Autotransportzug möglichst noch flexible mit unterschiedlichen Kraftfahrzeugen (Personenwagen der Oberklassen, der Mittelklasse, Kleinwagen, Vans u.s.w.) belanden werden können. Wie viele Fahrzeuge geladen werden können, hängt selbstverständlich immer von der Größe der Fahrzeuge ab. Es ist aber gebräuchlich, Autotransportzüge anhand von zu ladenden Mittelklassewagen auszulegen. Neben der Zahl der transportierbaren Fahrzeuge ist ein weiteres Auslegungskriterium die Lastverteilung auf die Achsen. Dabei ist es oft ein Problem, den Gesamtschwerpunkt der auf dem Motorwagen geladenen Fahrzeuge weit genug nach hinten zu bekommen, also die Vorderachse nicht zu überladen.

Auf dem europäischen Kontinent war es bisher nur möglich eine Beladung mit neun Mittelklassewagen zu erreichen. Dieses wird im Wesentlichen durch zwei Varianten erreicht. Nach der ersten Variante wird ein relativ kurzer Motorwagen mit einem entsprechend verlängerten Anhänger eingesetzt. Dabei werden bis zu drei Mittelklassewagen auf dem Motorwagen und bis zu sechs Mittelklassewagen auf dem Anhänger transportiert. Bei der zweiten Variante wird ein relativ langer Motorwagen mit Tandemanhänger verwendet. Der Motorwagen faßt fünf und der Tandemanhänger vier Mittelklassewagen. Es ergibt sich also bei beiden Varianten insgesamt eine Neunerbeladung. Die Dreier bzw. Fünferbeladung auf dem Motorwagen wird für den europäischen Kontinent innerhalb der gesetzlichen Vorgaben nur dadurch erreicht, daß ein Fahrzeug über dem Fahrerhaus des Motorwagens transportiert wird. Das Fahrerhaus kann deshalb nur sehr flach ausgebildet werden. Dieses geht zu Lasten des Komforts für den Fahrer. So bleibt beispielsweise kein Platz für eine Fahrerschlafkabine. Eine solche Fahrerschlafkabine ist aber oft gewünscht, insbesondere auf längeren Fahrten, um den Fahrer die erforderlichen Ruhepausen bequem verbringen zu lassen. Ein geräumiges Führerhaus ist oft auch eine Motivation für den jeweiligen Fahrer und ein gutes Argument bei der Suche nach guten Fahrern, welche schwer zu bekommen und vergleichsweise teuer sind.

Der Erfindung liegt das Problem zugrunde, einen Autotransporter (Motorwagen) und einen Gelenkzug zu schaffen, auf dem einerseits viele (Personen-)Kraftwagen transportiert werden können und andererseits ein möglichst geräumiges Fahrerhaus, möglichst mit Fahrerschlafkabine, zu schaffen. Dabei kann bei Autotransportern und Gelenkzügen für kurze Strecken die Ladekapazität zu Lasten des Fahrerhauses und, umgekehrt, bei Lastkraftwagen und Gelenkzügen für lange Strecken die Geräumigkeit des Fahrerhaus zu Lasten der Ladekapazität angepaßt sein.

Zur Lösung dieses Problems ist der erfindungsgemäße Autotransporter dadurch gekennzeichnet, daß der Rahmen ein oberhalb einer Vorderachse angeordnetes Vorderstück und ein oberhalb einer Hinterachse angeordnetes Hinterstück sowie ein tiefer als das Vorderstück und Hinterstück angeordnetes Mittelstück aufweist, wobei die Bühne an ihrem dem Führerhaus zugewandten Ende in der Ebene des Vorderstücks schwenkbar gelagert und mit ihrem der Hinterachse zugewandten Ende auf ein Niveau unterhalb des Hinterstücks absenkbar ist. Vorzugsweise ist das der Hinterachse zugewandte Ende der Bühne sogar auf ein Niveau unterhalb der Ebene der Vorder- und Hinterachse, insbesondere bis auf eine Ebene, welche der Unterseite des abgesenkten Mittelstücks entspricht, absenkbar.

Durch das abgesenkte Mittelstück ist der Bereich des Fahrzeugrahmens des Autotransporters zwischen Führerhaus und Hinterachse gegenüber dem Rahmen serienmäßiger Lkws abgesenkt. Schon hierdurch erhöht sich die Ladekapazität. Durch die schwenkbare Bühne läßt sich das der Hinterachse zugewandte Ende unterhalb der Ebene des Vorder- und Hinterstücks, also unterhalb des Niveaus des normalen Fahrzeugrahmens absenken, so daß diese Ladekapazität auch genutzt werden kann. Vorzugsweise läßt sich die Bühne noch unter dieses Niveau absenken, so daß zusätzliches Ladevolumen frei wird. Zumindest das auf dieser Bühne transportierte Fahrzeug kann auf einer abgesenkten Ebene transportiert werden, so daß sich über diesem Fahrzeug weitere Fahrzeuge entsprechend besser schachteln lassen. Es lassen sich so innerhalb der maximalen Ladehöhe mehr Fahrzeuge transportieren. Dieses kann dazu benutzt werden, ein zusätzliches Fahrzeug zu transportieren oder zur Steigerung des Komforts für den Fahrer ein größeres Fahrerhaus vorzusehen. Ein weiterer Effekt der Erfindung ist, daß, obwohl kein Fahrzeug mehr über dem Fahrerhaus transportiert werden muß, um die gebräuchliche Neunerbeladung zu erreichen, dennoch der Gesamtschwerpunkt der geladenen Fahrzeuge auf dem Motorwagen weiter nach hinten kommt, so daß die Vorderachse nicht überladen wird.

Nach einer Weiterbildung der Erfindung ist hinter der Bühne eine weitere Bühne vorgesehen. In diesem Fall ist es vorteilhaft, wenn die zueinander weisenden Enden dieser beiden Bühnen auf ein gemeinsames Niveau bewegbar sind. Hierdurch können beim Be- und Entladen die Fahrzeuge direkt von Bühne zu Bühne gefahren werden, ohne die sonst üblichen "Holperschwellen" über die Hinterachse des Motorwagens.

An einem Autotransporter sind unterschiedliche Anbauteile, wie beispielsweise Tankanlage, Batteriekasten oder Staufächer, angeordnet. Um für diese Anbauteile einen ausreichenden Platz zu schaffen, ist nach einer Weiterbildung der Erfindung vorgesehen, die vordere Bühne auf der unteren Ladeebene durch ein Gelenk in einen führerhausseitigen und einen hinterachsseitigen Abschnitt zu unterteilen. Der führerhausseitige Abschnitt wird während des Transports eines Fahrzeuges in eine etwa horizontale Position geschwenkt, während der hinterachsseitige Abschnitt nach unten geschwenkt wird. Unter dem führerhausseitigen Abschnitt entsteht so ausreichend Platz für die Anbauteile. Das Gelenk kann dabei so weit hinten angeordnet sein, daß es den Boden eines zu ladenden Fahrzeuges gerade nicht berührt. Die in Transportrichtung gesehen vorderen Räder des zu ladenden Fahrzeugs stehen dabei auf dem führerhausseitigen Abschnitt, während die in Transportrichtung gesehen hinteren Räder des zu transportierenden Fahrzeugs auf dem hinterachsseitigen Abschnitt positioniert sind. Alternativ kann der Freiraum für Anbauteile auch dadurch geschaffen werden, daß die Bühne an ihrem dem Führerhaus zugewandten, schwenkbar gelagerten Ende anhebbar und absenkbar ist. Dieses kann auch zusätzlich zu der mittels Gelenk in zwei Abschnitte teilten Bühne eingesetzt werden, um den Freiraum für Anbauteile weiter zu vergrößern.

Die vorstehend genannte, mit dem Gelenk versehene Bühne läßt sich vorteilhaft für eine weitere Gewichts- und Kostenreduktion des erfindungsgemäßen Autotransporters einsetzen. An einer oberen Ladeebene kann so nämlich in einer Schiene für ein auf diese Ladeebene zu transportierendes Fahrzeug eine Lücke vorgesehen sein. Hierdurch wird Schienenmaterial und damit letztlich Gewicht und Kosten eingespart. Während ein Fahrzeug auf die obere Ladeebene geladen wird, wird diese Lücke durch den hinterachsseitigen Abschnitt der unteren Bühne geschlossen, so daß ein Fahrzeug problemlos auf die obere Ladeebene geladen werden kann.

Für den Fall, daß in dem Bereich der Lücke Räder einer Achse des in diesem Bereich geladenen Fahrzeugs während des Transports positioniert sind, sind nach einer Weiterbildung quer verlaufende Stangen vorgesehen, zwischen welchen diese Räder während des Transports gelagert sind. Auch mit den Stangen ergibt sich gegenüber durchlaufenden Schienen eine Gewichtsreduktion. Quer verlaufende Stangen können auch beliebigen anderen, geeigneten Ladepositionen für zu transportierende Fahrzeuge vorgesehen sein, was das Gewicht des Autotransporters weiter reduziert.

Nach einer konstruktiven Ausgestaltung der Erfindung kann die Bühne an ihrem dem Führerhaus zugewandten, schwenkbaren Ende anhebbar und absenkbar sein.

Ein das der Erfindung zugrunde liegende Problem lösender Gelenkzug weist einen Autotransporter mit den Erfindungsmerkmalen auf.

Die Erfindung wird nachfolgend anhand eines in der Zeichnung dargestellten Ausführungsbeispiels näher erläutert. Es zeigt:
- Fig. 1: ein erstes Ausführungsbeispiel für einen Gelenkzug mit den Erfindungsmerkmalen in Seitenansicht in einer erste Beladungsvariante,
- Fig. 2: den Gelenkzug gemäß Fig. 1 in Seitenansicht während des Beladens,
- Fig. 3.: den Gelenkzug gemäß Fig. 1 in Seitenansicht in einer zweiten Beladungsvariante,
- Fig. 4: den Gelenkzug gemäß Fig. 1 in Seitenansicht in einer dritten Beladungsvariante,
- Fig. 5: den Gelenkzug gemäß Fig. 1 in Seitenansicht in einer vierten Beladungsvariante,
- Fig. 6: ein zweites Ausführungsbeispiel für einen Gelenkzug mit den Erfindungsmerkmalen in Seitenansicht in einer Beladungsvariante mit Fahrzeugen wie der Gelenkzug gemäß Fig. 5,
- Fig. 7: den Gelenkzug gemäß Fig. 1 in Seitenansicht in einer fünften Beladungsvariante,
- Fig.8: den Gelenkzug gemäß Fig. 1 in Seitenansicht in einer weiteren Beladungsvariante,
- Fig. 9: einen ersten Belandungsschritt für einen Gelenkzug mit den Erfindungsmerkmalen,
- Fig. 10: einen zweiten Beladungsschritt für den Gelenkzug gemäß Fig. 9,
- Fig. 11: einen dritten Beladungsschritt für den Gelenkzug gemäß Fig. 9,
- Fig. 12: einen weiteren Beladungsschritt für den Gelenkzug gemäß Fig. 9,
- Fig. 13: ein weiteres Ausführungsbeispiel für einen Gelenkzug mit den Erfindungsmerkmalen in Seitenansicht in teilbeladenem Zustand,
- Fig. 14: den Gelenkzug gemäß Fig. 13 mit vollständig beladenem Motorwagen,

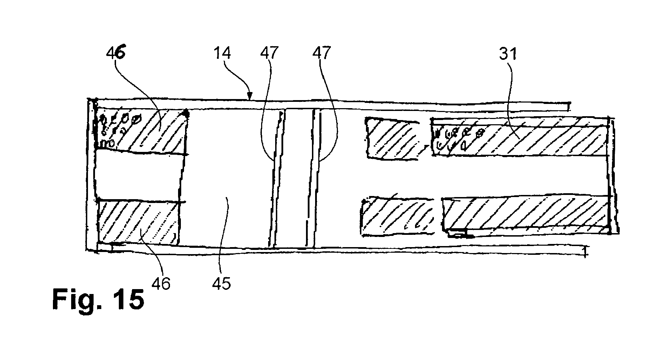

- Fig. 15: eine obere Ladeebene des Motorwagens des Gelenkzugs gemäß Fig. 13 in Draufsicht.

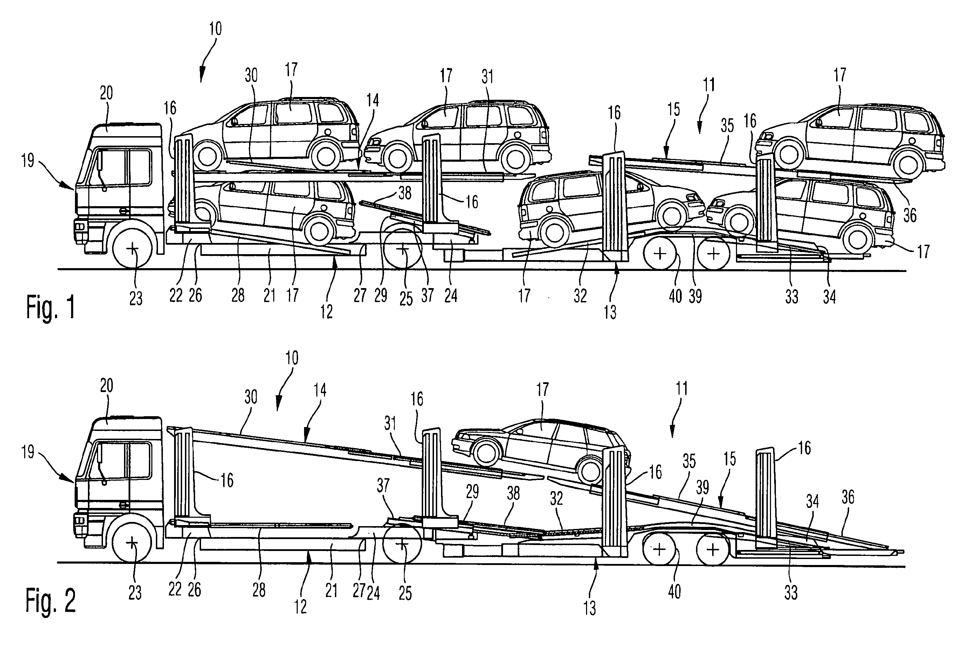

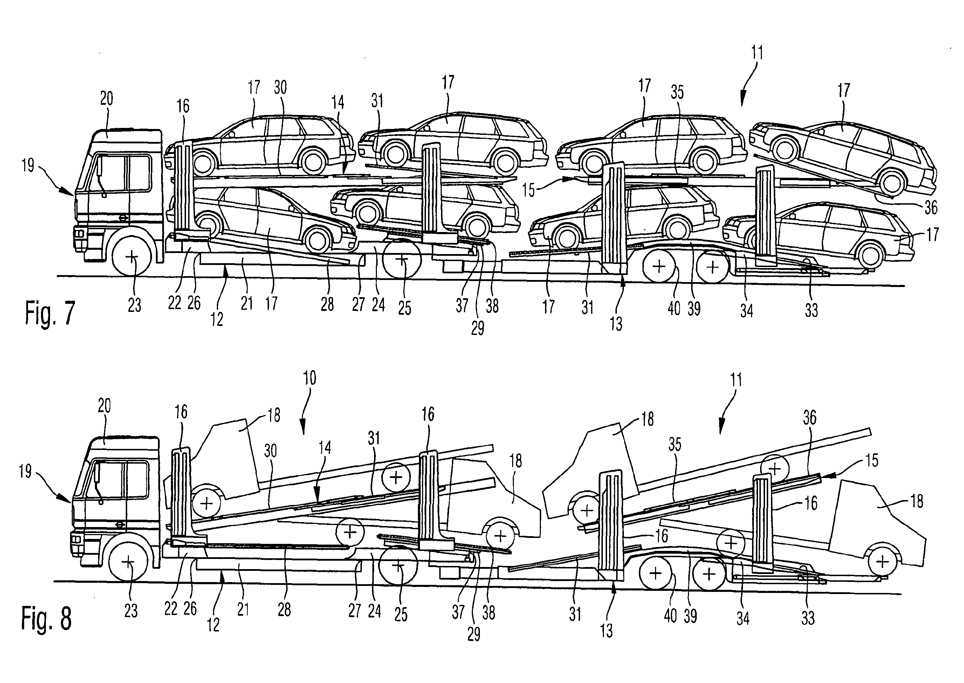

Die in den Fig. 1 bis 8 gezeigten Gelenkzüge besteht aus einem Motorwagen (Autotransporter) 10 und einem Anhänger 11. Der Motorwagen 10 und Anhänger 11 weisen jeweils eine untere Ladeebene auf, die jeweils durch den Rahmen 12 des Motorwagens 10 bzw. den Rahmen 13 des Anhängers 11 gebildet sind. Oberhalb der Rahmen 12, 13 wird jeweils eine zweite, obere Ladeebene 14 bzw. 15 an aufrechten Stützen 16 höhenverstellbar angeordnet. In Fig. 1 bis 7 ist eine Beladung mit Personenwagen 17 und in Fig. 8 eine Beladung mit (Klein-)Lastwagen 18 gezeigt.

Den gezeigten Gelenkzügen ist gemeinsam, daß beim Motorwagen 10 ein hinter einem Führerhaus 19, ggf. mit Fahrerschlafkabine 20, angeordnetes Mittelstück 21 des Rahmens 12 des Motorwagens 10 gegenüber dem normalen Fahrzeugrahmen eines herkömmlichen Lastkraftwagens abgesenkt ist. Wie in Fig. 1 erkennbar befindet sich ein Vorderstück 22 oberhalb der Vorderachse 23 und ein Hinterstück 24 oberhalb der Hinterachse 25 und damit auf der Ebene normaler Fahrzeugrahmen eines herkömmlichen Lastkraftwagens. Hinter der Vorderachse 23 bzw. vor der Hinterachse 25 ist der Rahmen 12 jedoch nach unten abgekröpft (Abkröpfungen 26, 27), so daß das Mittelstück 21 tiefer angeordnet ist, als das Vorderstück 22 und das Hinterstück 24.

Den Fig. 1 bis 8 ist weiterhin zu entnehmen, daß der Motorwagen 10 gegenüber einem sonst als Motorwagen in Autotransport-Gelenkzügen verwendeten Motorwagen länger und der Anhänger 11 entsprechend kürzer ausgebildet ist. Dieses ist eine zusätzliche Maßnahme, die das Erreichen der günstigeren Beladung erleichtert. Diese Maßnahme ist aber nicht zwingend. Vielmehr wird die Auswahl eines geeigneten Längenverhältnisses zwischen Motorwagen 10 und Anhänger 11 im wesentlichen davon abhängen, ob auf dem Gelenkzug Kleinwagen, Mittelklassewagen oder Wagen der Oberklasse transportiert werden sollen.

Alternativ zur oben beschriebenen Absenkung des Mittelstücks 21 durch die Abkröpfungen 26 und 27 kommt auch jede andere Absenkung in Betracht. So kann das Mittelstück beispielsweise auch als zur Vorderachse oder zur Hinterachse abfallende Schräge mit nur einer Abkröpfung ausgebildet sein.

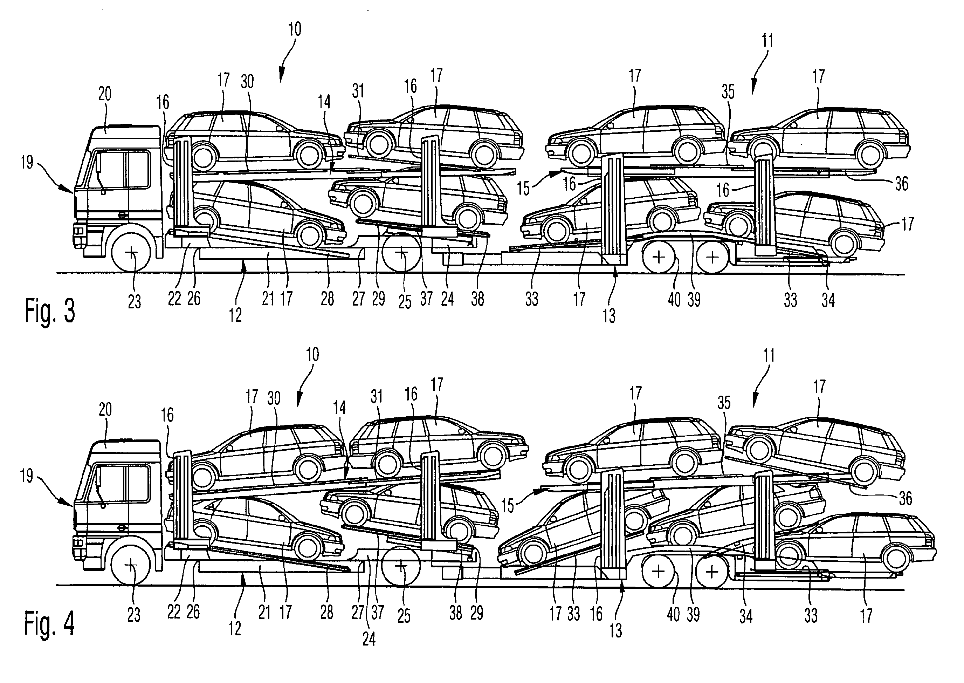

An den Rahmen 12, 13 und/oder an den oberen Ladeebenen 14, 15 sind schwenkbare Bühnen 28, 29, 30, 31, 32, 33, 34, 35, 36 angeordnet, durch die sich beladene Personenkraftwagen 17 zusätzlich verschwenken lassen, um so zu einer möglichst dichten Schachtelung von Personenkraftwagen 17 zu kommen. Die Bühne 28, welche auf am Motorwagen 10 auf der unteren Ladeebene zwischen der Vorderachse 23 und der Hinterachse 25 angeordnet ist, ist an ihrem vorderen (dem Führerhaus 19 zugewandten) Ende schwenkbar am Rahmen 12 angebracht. Die Bühne 28 kann nach unten geschwenkt werden, wie dieses in den Fig. 3 bis 7 gezeigt ist. Konkret kann das hintere (der Hinterachse 25 zugewandte) nach unten auf ein Niveau unterhalb der eigentliche Rahmeneben geschwenkt werden. Wie den Fig. 3 bis 7 zu entnehmen ist, wird das hintere Ende sogar noch unterhalb der Ebene der Achsen 23, 25 bis auf eine Ebene, die der Unterseite des abgesenkten Mittelstücks 21 entspricht, nach unten geschwenkt.

Die Bühne 29, welche am Motorwagen 10 auf der unteren Ladeebene hinter der Bühne 28, etwa oberhalb der Hinterachse 25 angeordnet ist, ist zweiteilig ausgebildet, nämlich mit einem Schwenkrahmen 37 und Schiebeelement 38, welches am Schwenkrahmen 37 in Längsrichtung des Gelenkzuges hin- und herfahrbar angeordnet ist.

Die vordere Bühne 30 in der oberen Ladeebene 14 am Motorwagen 10 ist an ihrem hinteren Ende schwenkbar angebracht. Ebenso die hintere Bühne 31.

Am Anhänger 11 ist eine vordere, dem Motorwagen 10 zugewandte Bühne 32 an ihrem hinteren Ende an einer Spindel an der vorderen Stütze 16 des Anhängers 11 heb- und senkbar angebracht und mittels eines Hydraulikzylinders (nicht dargestellt) in einer vertikalen Ebene schwenkbar. Die weitere Bühne 33 ist mit ihrem vorderen Ende an einem Radkasten 39 für eine Tandemachse 40 des Anhängers schwenkbar befestigt und die noch dahinter liegende Bühne 34 an ihrem hintern Ende am Rahmen 13, wobei ihr vorderes Ende hinter dem Radkasten 39 nach unten geschwenkt werden kann. Das vordere Ende ragt also nach vorn nicht über das hintere Ende des Radkastens 39 hinaus.

An der oberen Ladeebene 15 des Anhängers 11 sind zwei Bühnen 35 und 36 hintereinander schwenkbar angeordnet, und zwar die vordere Bühne 35 an ihrem vorderen Ende und die hintere Bühne 36 etwa in ihrer Mitte.

Es sind also insgesamt neun schwenkbare Bühnen 28..36 vorgesehen, also beim Gelenkzug gemäß Fig. 1 bis 5, 7 und 8 für jeden ladbaren Personenwagen 17 eine Bühne 28..36.

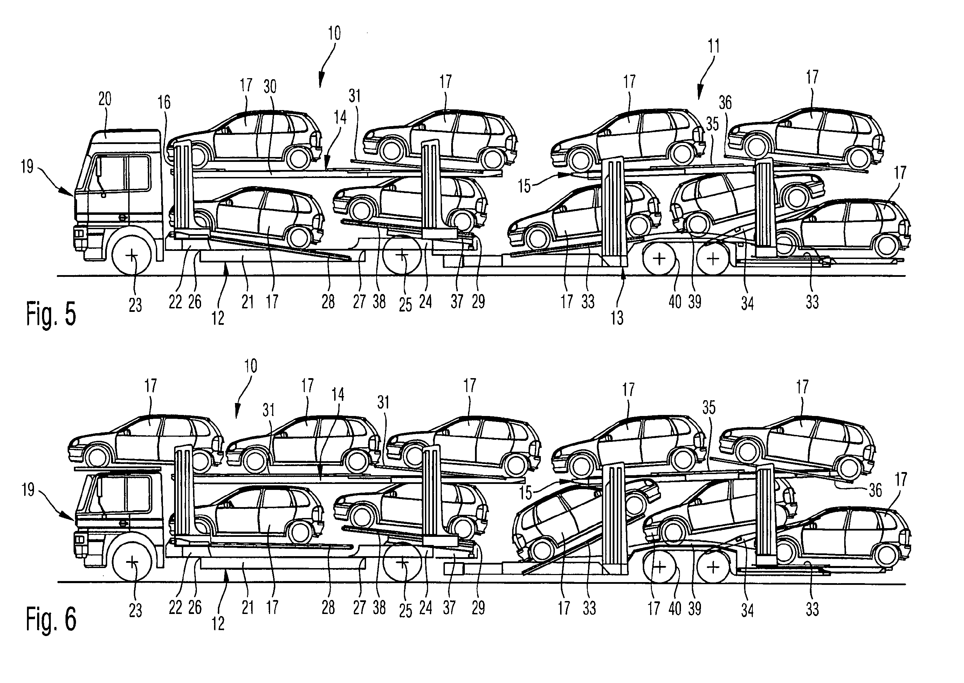

In den Fig. 1 bis 5, 7 und 8 ist jeweils der selbe Gelenkzug, nämlich mit einem Motorwagen 10 mit Fahrerschlafkabine 20, in unterschiedlichen Beladungsvarianten gezeigt. Fig. 6 zeigt einen Gelenkzug mit einem Motorwagen 10 ohne Fahrerschlafkabine, der mit den selben Fahrzeugen wie in Fig. 5 gezeigt, beladen ist.

Fig. 1 zeigt konkret eine sogenannte Sechserbeladung, also einen mit sechs Personenkraftwagen 17 beladenen Gelenkzug. Bei den Personenwagen 17 handelt es sich um Minivans. Die Bühne 28 ist auf ihre unterste Stellung geschwenkt.

Fig. 2 zeigt den Gelenkzug während des Be- bzw. Endladens. Die Bühne 28 ist in horizontale Stellung geschwenkt. Die dahinter angeordnete Bühne 29 ist so geschwenkt und das Schiebeelement 38 nach hinten gefahren, daß sich von der Bühne 32 über die Bühne 29 eine "Fahrbahn" zur Bühne 29 ergibt.

Fig. 3 zeigt eine Achterbeladung mit Kombipersonenwagen 17 der Mittelklasse, wobei auf dem Motorwagen vier Personenwagen 17 transportiert werden. In Fig. 4 werden auf dem unteren Rahmen 14 des Anhängers zwei Limousinen anstelle eines Kombis befördert, so daß sich hier eine Neunerbeladung ergibt. In beiden Fällen ist der auf der Bühne 28 geladen Personenwagen 17 rückwärts geladen, als mit dem Heck zum Führerhaus 19. die Bühne 28 ist auf ihre unterste Stellung nach unten geschwenkt. Der auf der Bühne 29 dahinter geladene Personenwagen ist vorwärts geladen und das Schiebeelement 38 bei nach oben geschwenkter Bühnen 29 nach vorn verfahren. Der Vorderwagen des auf der Bühne 29 transportierten Personenwagens 17 ist dadurch zum Teil über dem Vorderwagen des Personenwagens 17 auf der Bühne 28 angeordnet.

Fig. 5 zeigt eine Neunerbeladung mit Personenwagen 17 der Größe eines Opel Corsa®. Dabei sind wieder vier Personenkraftwagen 17 auf dem Motorwagen 10 (Viererbeladung) und fünf Personenkraftwagen 17 auf dem Anhänger 11 (Fünferbeladung) geladen. Die Bühne 28 ist auf ihre unterste Stellung nach unten geschwenkt. Gegenüber einer herkömmlichen Beladung werden bei den Ausführungsbeispielen gemäß Fig. 3 bis 5 also auch nur neun Personenkraftwagen 17 befördert, jedoch ein zusätzliches Fahrzeug auf dem Motorwagen 10.

Gegenüber einer herkömmlichen Beladung ist oberhalb eines Führerhauses 19 kein Fahrzeug 17 angeordnet, so daß das Führerhaus 19 erhöht und so mit der zusätzlichen Fahrerschlafkabine 20 ausgerüstet werden kann. Durch entsprechend andere Schachtelungen der Personenkraftwagen 17 läßt es sich bei entsprechend niedrigerem ("normalen") Führerhaus auch erreichen, daß fünf Personenwagen 17 auf dem Motorwagen 10 transportiert werden können, so daß sich insgesamt eine Zehnerbeladung ergibt (Fig. 6). Die Bühne 28 kann dabei in horizontaler Stellung bleiben.

Fig. 7 zeigt eine Achterbeladung mit Kombipersonenwagen 17 der Oberklasse. Die Bühne 28 ist wieder in ihre unterste Stellung geschwenkt, wobei der auf ihr geladene Personenwagen 17 rückwärts und der auf der Bühne 29 dahinter geladene Personenwagen 17 vorwärts geladen ist. Ihre Vorderwagen überlappen sich wieder (vgl. auch die Beladungsvarianten gemäß Fig. 3 und 4).

Fig. 8 zeigt der Vollständigkeit halber noch eine Beladung mit vier Kleinlastwagen 18.

Bei genauer Betrachtung der Fig. 1 bis 8 erkennt man, daß für ein optimales Verschachteln der Personenwagen 17 bzw. Kleinlastwagen 18 nicht nur die Bühnen 28..36 verschwenkt, sondern auch die oberen Ladeebenen 14, 15 in ihre Höhe eingestellt und teilweise auch schräg gestellt werden.

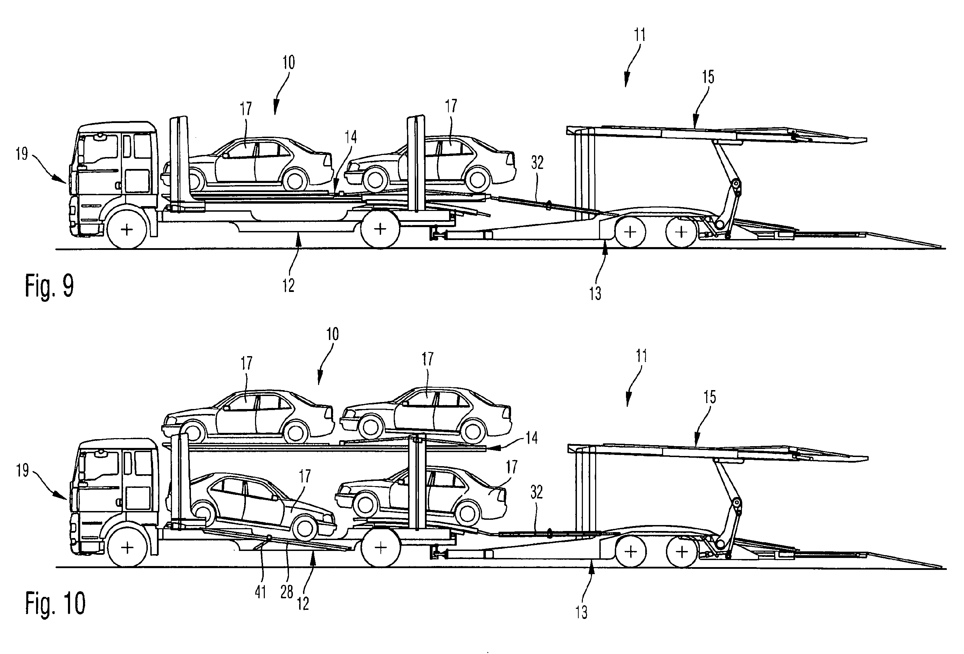

In den Figuren 9 bis 10 ist gezeigt, wie ein erfindungsgemäßer Gelenkzug vorteilhaft beladen werden kann:

Fig. 9 zeigt zunächst, wie die obere Ladeebene 14 des Motorwagens 10 beladen wird. Die obere Ladeebene 14 ist an den Stützen 16 soweit abgesenkt, daß sie auf dem Rahmen 12 aufliegt. Nun werden im vorliegenden Fall zwei Personenwagen 17 auf die obere Ladeebene 14 über den Anhänger 11 gefahren. Die Personenwagen 17 fahren dabei über den Rahmen 13 des Anhängers 11 unter dessen obere Ladeebene 15 hindurch. Die Bühne 32 am Rahmen des Anhängers 11 dient hier als Überfahrrampe, so daß eine gesonderte Ladeschiene nicht erforderlich ist.

Die so auf die obere Ladeebene 14 des Motorwagens 10 geladenen Personenwagen 17 können nun von einer Bedienperson bequem neben dem Motorwagen 10 stehend verzurrt werden. Die Bedienperson braucht nicht mehr auf dem Motorwagen "herumturnen", was die Sicherheit, insbesondere bei Regen, Eis und Schnee, erhöht. Da die Bedienperson auch nicht mehr auf dem Motorwagen 10 zwischen den geladenen Personenwagen 17 und einem oft vorhandenen Geländer auf der obere Ladeebene 14 entlanggehen muß, ist die Gefahr eines Verkratzen oder sonstigen Beschädigen der Personenwagen 17, beispielsweise durch (an sich verbotene) Uhren, Ringe oder dergleichen, vermieden.

Die obere Ladeebene 14 des Motorwagens wird nun in ihre für den Transport gewünschte Position nach oben gefahren. Jetzt können in analoger Weise, im vorliegenden Fall zwei, Personenwagen 17 auf den Rahmen 12, bzw. dessen Bühnen 28 und 29 geladen werden (Fig. 10). Die Bühne 28 wird mit ihrem hinteren Ende, wie oben beschrieben, abgesenkt, wobei in Fig. 10 bis 12 auch der hierfür dienende Druckmittelzylinder 41 erkennbar ist.

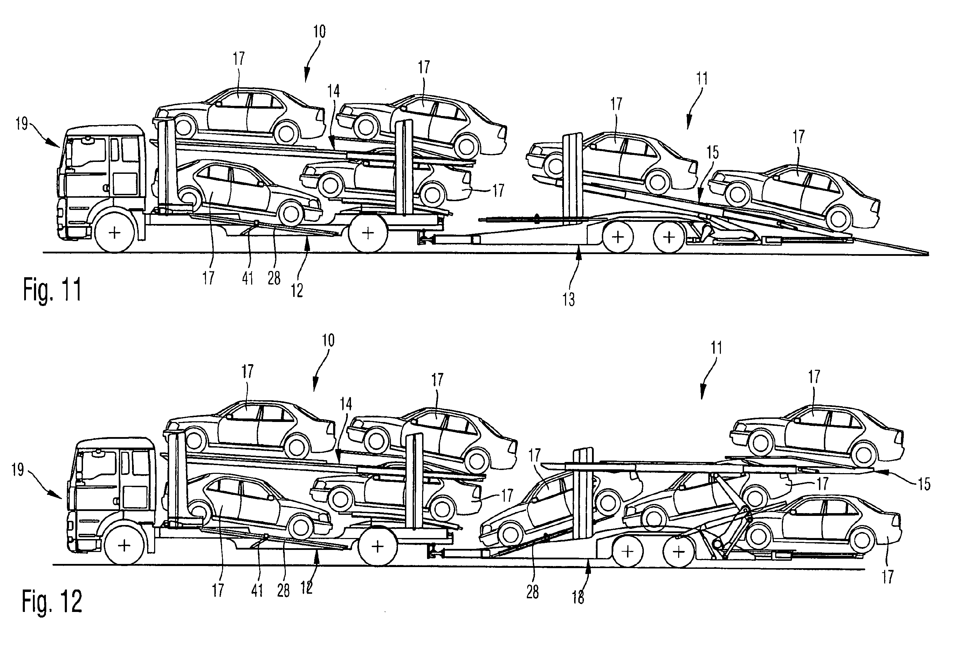

Nun wird die obere Ladeebene 15 des Anhängers 11 auf dessen Rahmen 13 abgesenkt und beladen (Fig. 11). Die Personenwagen 17 werden wieder bei abgesenkter oberer Ladeebene 15 verzurrt.

Schließlich wird die obere Ladeebene 15 des Anhängers 11 in die für den Transport gewünschte Stellung nach oben verfahren und die untere Ladeebene (Rahmen 13) des Anhängers beladen (Fig. 12).

Bei dieser Art des Beladens des Gelenkzuges sind also keine zusätzlichen Ladeschienen erforderlich. Der Gelenkzug läßt sich vollständig unter Verwendung der vorhandenen Bühnen 28..36 beladen. Ein manuelles Ein- und Ausrichten zusätzlicher Schienen entfällt Es ergeben sich insgesamt flache Überfahrten für die Personenwagen 17, ohne das sonst oft vorhandene Holpern und Springen der Personenwagen 17, sowie flache Auf- und Überfahrtswinkel.

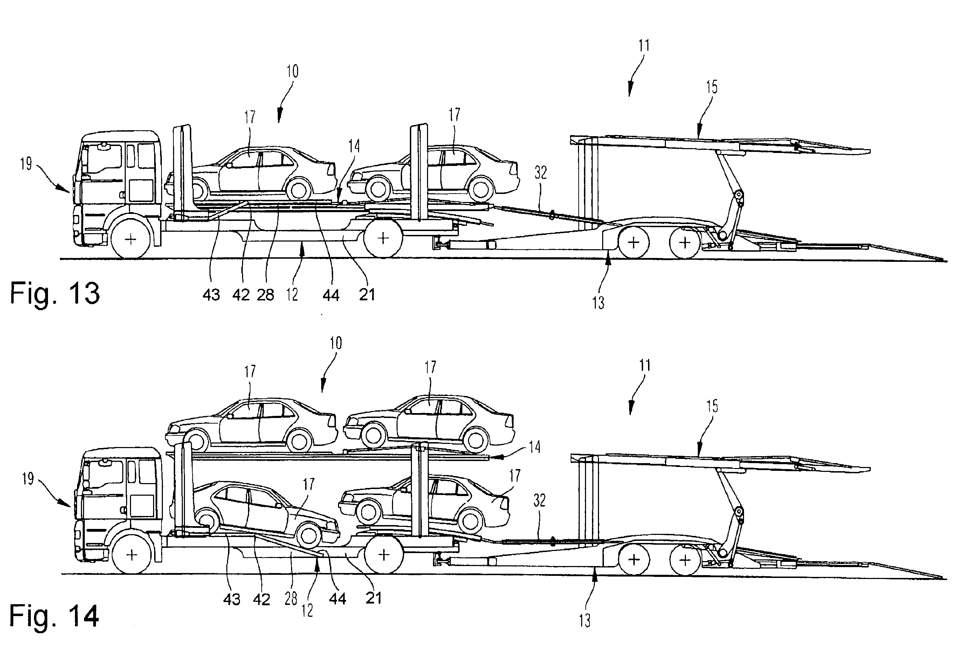

Der Motorwagen 10 des Ausführungsbeispiels gemäß Fig. 13 und 14 unterscheidet sich vom Motorwagen 10 der vorstehend beschriebenen Ausführungsbeispiele dadurch, daß die Bühne 28 durch ein Gelenk 42 in einen führerhausseitigen Abschnitt 43 und einen hinterachsseitigen Abschnitt 44 unterteilt ist. An der oberen Ladeebene 14 weist die Bühne 30 eine Lücke 45 auf. Schienen 46 sind nur in dem vorderen, dem Führerhaus 19 zugewandten Bereich vorgesehen. Zur Aufnahme der Hinterräder des auf die Bühne 30 zu ladenden Fahrzeugs dienen quer verlaufende und in Längsrichtung der Bühne 30 verschieblich angeordnete Stangen 47.

Um ein Fahrzeug 17 auf die Bühne 30 der oberen Ladeebene 40 laden zu können, schließt, wie in Fig. 13 gezeigt, der hinterachsseitige Abschnitt 44 der unteren Bühne 28 die Lücke 45. Hierzu wird der führerhausseitige Abschnitt 43 nach oben geschwenkt und gleichzeitig der hinterachsseitige Abschnitt 44 in eine horizontale Lage gebracht. Ein Fahrzeug 17 kann nun auf die Bühne 30 aufgefahren werden, bis die Vorderräder auf die Schienen 46 gelangen. Die Hinterräder werden zwischen den Stangen 47 aufgenommen, welche bereits vorher auf die entsprechende Position eingestellt worden sein können. Alternativ ist es auch möglich, die Stangen 47 jetzt in ihre zum Transport des Fahrzeugs 17 erforderliche Position zu bringen.

Nachdem die obere Ladeebene 14 mit Fahrzeugen beladen ist, wird sie, wie bereits vorstehend beschrieben, in ihre obere, in Fig. 14 gezeigte Position gebracht. Nun kann die untere Ladeebene (Rahmen 12) beladen werden. Fig. 14 zeigt den bereits beladenen Motorwagen 10. Die Bühne 28 ist hier in eine Position geschwenkt, bei der der führerhausseitige Abschnitt 43 der Bühne 28 in etwa horizontal angeordnet ist. Am Gelenk 42 knickt der hinterachsseitige Abschnitt 44 nach unten ab, wobei das hinterachsseitige Ende des hinterachsseitigen Abschnitts 44 etwa auf der Ebene der Unterkante des abgesenkten Mittelstücks 21 angeordnet ist.

### Bezugszeichenliste:

- 10: Motorwagen
- 11: Anhänger
- 12: Rahmen
- 13: Rahmen
- 14: Ladeebene
- 15: Ladeebene
- 16: Stütze
- 17: Personenkraftwagen
- 18: Lastwagen
- 19: Führerhaus
- 20: Fahrerschlafkabine
- 21: Mittelstück
- 22: Vorderstück
- 23: Vorderachse
- 24: Hinterstück
- 25: Hinterachse
- 26: Abkröpfung
- 27: Abkröpfung
- 28: Bühne
- 29: Bühne
- 30: Bühne
- 31: Bühne
- 32: Bühne
- 33: Bühne
- 34: Bühne
- 35: Bühne
- 36: Bühne
- 37: Schwenkrahmen
- 38: Schiebeelement
- 39: Radkasten
- 40: Tandemachse
- 41: Druckmittelzylinder
- 42: Gelenk
- 43: Abschnitt
- 44: Abschnitt
- 45: Lücke
- 46: Schiene
- 47: Stange

## Patentansprüche

1. Autotransporter mit einem Führerhaus (19) und mit einem von einer Vorderachse (23) und einer Hinterachse (25) getragenen Rahmen (12), an welchem eine Bühne (28) für Fahrzeuge (17, 18) angeordnet ist, welche zwischen der Vorderachse (23) und der Hinterachse (25) angeordnet sowie an ihrem dem Führerhaus (19) zugewandten Ende schwenkbar gelagert und mit ihrem der Hinterachse (25) zugewandten Ende absenkbar ist, **dadurch gekennzeichnet, daß** der Rahmen (12) ein oberhalb einer Vorderachse (23) angeordnetes Vorderstück (22), ein oberhalb einer Hinterachse (25) angeordnetes Hinterstück (24) sowie ein tiefer als das Vorderstück (22) und das Hinterstück (24) angeordnetes Mittelstück (21) aufweist, wobei die Bühne (28) an ihrem dem Führerhaus (19) zugewandten Ende in der Ebene des Vorderstücks (22) schwenkbar gelagert und mit ihrem der Hinterachse (25) zugewandten Ende auf ein Niveau unterhalb des Hinterstücks (24) absenkbar ist.

2. Autotransporter nach Anspruch 1, **dadurch gekennzeichnet, daß** die Bühne (28) mit ihrem der Hinterachse (25) zugewandten Ende auf ein Niveau unterhalb der Ebene der Achsen (23, 25) absenkbar ist.

3. Autotransporter nach Anspruch 2, **dadurch gekennzeichnet, daß** die Bühne (28) mit ihrem der Hinterachse (25) zugewandten Ende auf eine Ebene, welche der Unterseite des abgesenkten Mittelstücks entspricht, absenkbar ist.

4. Autotransporter nach einem der Ansprüche 1 bis 3, **dadurch gekennzeichnet, daß** hinter der Bühne (28) eine weitere Bühne (29) für ein weiteres Fahrzeug (17, 18) angeordnet ist, wobei die zueinander weisenden Enden der Bühnen (28, 29) auf ein gemeinsames Niveau bewegbar sind.

5. Autotransporter nach einem der Ansprüche 1 bis 4, **dadurch gekennzeichnet, daß** die Bühne (28) durch ein Gelenk (42) in einen führerhausseitigen Abschnitt (43) und einen hinterachsseitigen Abschnitt (44) unterteilt ist.

6. Autotransporter nach Anspruch 5, **dadurch gekennzeichnet, daß** in einer oberen Ladeebene (14) eine Lücke (45) ohne Schienen für zu ladende Fahrzeuge (17) angeordnet ist und daß die Lücke (45) während des Ladevorganges auf die obere Ladeebene (14) durch einen der Abschnitte (43, 44) der Bühne (28) geschlossen ist.

7. Autotransporter nach einem der Ansprüche 1 bis 6, **dadurch gekennzeichnet, daß** Räder einer Hinterachse und/oder Vorderachse wenigstens eines der zu transportierenden Fahrzeuge (17, 18) zwischen quer verlaufenden Stangen (47) während des Transports gelagert sind.

8. Autotransporter nach Anspruch 7, **dadurch gekennzeichnet, daß** die Stangen (47) in Längsrichtung des Autotransporters gesehen verschieblich angeordnet sind.

9. Autotransporter nach einem der Ansprüche 1 bis 8, **dadurch gekennzeichnet, daß** die Bühne (28) an ihrem dem Führerhaus (19) zugewandten, schwenkbar gelagerten Ende anhebbar und absenkbar ist.

10. Gelenkzug mit einem Autotransporter (10) nach einem der Ansprüche 1 bis 9 und einem Anhänger (11).

## Claims

1. Haulaway comprising a truck cabin (19) and a frame (12) supported by a front axle (23) and a rear axle (25), on which a platform (28) for vehicles (17, 18) is disposed that is arranged between said front axle (23) and said rear axle (25) and supported for a pivoting movement at its end facing said truck cabin (19) and for being lowered at its end facing said rear axle (25), **characterised in that** said frame (12) comprises a front section (22) disposed above a front axle (23), a rear section (24) disposed above a rear axle (25) as well as a central section (21) disposed lower than said front section (22) and said rear section (24), with said platform (28) being supported for a pivoting movement in the plane of said front section (22) at its end facing said truck cabin (19) and being adapted for being lowered to a level below said rear section (24) at its end facing said rear axle (25).

2. Haulaway according to Claim 1, **characterised in that** said platform (28) is adapted to be lowered, at its end facing said rear axle (25), to a level below the plane of said axles (23, 25).

3. Haulaway according to Claim 2, **characterised in that** said platform (28) is adapted to be lowered, at its end facing said rear axle (25), to a plane corresponding to the bottom side of the lowered central section.

4. Haulaway according to any of the Claims 1 to 3, **characterised in that** a further platform (29) is arranged behind said platform (28) for a further vehicle (17, 18), with the ends of said platforms (28, 29) directed to each other being adapted to be moved to a common level.

5. Haulaway according to any of the Claims 1 to 4, **characterised in that** said platform (28) is subdivided by a hinge (42) into a truck cabin side segment (43) and a rear axle segment (44).

6. Haulaway according to Claim 5, **characterised in that** a gap (45) without rails for vehicles to be loaded (17) is provided in an upper cargo plane (14), and that said gap (45) is closed by one of said segments (43, 44) of said platform (28) during the operation of loading onto said upper cargo plane (14).

7. Haulaway according to any of the Claims 1 to 6, **characterised in that** wheels of a rear axle and/or front axle of at least one of the vehicles to be carried (17, 18) are supported in transport between transversely extending rods (47).

8. Haulaway according to Claim 7, **characterised in that** said rods (47) are disposed for displacement along the longitudinal extension of the haulaway.

9. Haulaway according to any of the Claims 1 to 8, **characterised in that** said platform (28) is adapted to be raised and lowered at its end supported for a pivoting movement and facing said truck cabin (19).

10. Articulated train including a haulaway (10) according to any of the Claims 1 to 9 and a trailer (11).

## Revendications

1. Camion porteur d'automobiles comprenant une cabine de conducteur (19) et un châssis (12) appuyé par un essieu avant (23) et un essieu arrière (25), auquel une plateforme (28) pour véhicules (17, 18) est disposée, qui est aménagée entre ledit essieu avant (23) et ledit essieu arrière (25), en étant logé pour un mouvement pivotant à son extrémité en face de ladite cabine de conducteur (19) et pour un abaissement à son extrémité en face dudit essieu arrière (25), **caractérisé en ce que** ledit châssis (12) comprend une partie avant (22) disposée au-dessus d'un essieu avant (23), une partie arrière (24) disposée au-dessus d'un essieu arrière (25) ainsi qu'une partie centrale (21) disposée à un niveau plus bas que ladite partie avant (22) et ladite partie arrière (24), à ladite plateforme (28) étant appuyée pour un mouvement pivotant dans le plan de ladite partie avant (22) à son extrémité en face de ladite cabine de conducteur (19) et étant apte à être abaissé à un niveau au-dessous de ladite partie arrière (24) à son extrémité en face dudit essieu arrière (25).

2. Camion porteur d'automobiles selon la revendication 1, **caractérisé en ce que** ladite plateforme (28) est apte à être abaissé, de son extrémité en face dudit essieu arrière (25), à un niveau au-dessous du plan desdites essieux (23, 25).

3. Camion porteur d'automobiles selon la revendication 2, **caractérisé en ce que** ladite plateforme (28) est apte à être abaissé, de son extrémité en face dudit essieu arrière (25), à un plan correspondant au dessous de la partie centrale abaissée.

4. Camion porteur d'automobiles selon une quelconque des revendications 1 à 3, **caractérisé en ce qu'**une plateforme (29) additionnelle est disposée en arrière de ladite plateforme (28) pour un véhicule additionnelle (17, 18), aux extrémités desdites plateformes (28, 29), qui s'étendent l'une vers l'autre, étant aptes à être déplacé à un niveau commun.

5. Camion porteur d'automobiles selon une quelconque des revendications 1 à 4, **caractérisé en ce que** ladite plateforme (28) est divisée par un assemblage articulé (42) en un segment du côté de la cabine de conducteur (43) et en un segment du côté de l'essieu arrière (44).

6. Camion porteur d'automobiles selon la revendication 5, **caractérisé en ce qu'**un interstice (45) sans rails pour véhicules à charger (17) est formé dans un plan de charge supérieur (14), et **en ce que** ledit interstice (45) est fermé par un desdits segments (43, 44) de ladite plateforme (28) au cours de l'opération de chargement sur ledit plan de charge supérieur (14).

7. Camion porteur d'automobiles selon une quelconque des revendications 1 à 6, **caractérisé en ce que** des roues d'un essieu arrière et/ou d'un essieu avant d'au moins un des véhicules à transporter (17, 18) s'appuient, en transport, entre des barres (47) s'étendant en travers.

8. Camion porteur d'automobiles selon la revendication 7, **caractérisé en ce que** lesdites barres (47) sont disposées pour leur déplacement le long de l'étendue longitudinale du camion porteur d'automobiles.

9. Camion porteur d'automobiles selon une quelconque des revendications 1 à 8, **caractérisé en ce que** ladite plateforme (28) est apte à être soulevé et abaissé de son extrémité logée pour un mouvement pivotant, qui se trouve en face de ladite cabine de conducteur (19).

10. Colonne articulée de véhicules comprenant un camion porteur d'automobiles (10) selon une quelconque des revendications 1 à 9 et une remorque (11).
